# EUROPEAN PATENT APPLICATION

(11) **EP 4 570 631 A1**
(43) Date of publication of application: **18.06.2025**
(21) Application number: 24209127.0
(22) Date of filing: 28.10.2024
(51) Int. Cl.: B62D 33/06, B60G 99/00, B62D 49/06

(54) **CAB SUSPENSION SYSTEM**

(30) Priority: 11.12.2023 GB 202318872
(71) Applicant: AGCO International GmbH, 8212 Neuhausen am Rheinfall (CH)
(72) Inventor: Keller, Andreas, 87616 Marktoberdorf (DE)
(74) Representative: AGCO Intellectual Property Department

(57) **Abstract**

Embodiments of the present disclosure generally relate to a vehicle having a cab with a cab suspension system. Example embodiments include a vehicle (200) comprising a chassis (202) and a cab (203) for a driver of the vehicle mounted to the chassis (202). The cab (203) has an inner structure (208) having a floor (201) supporting a driver seat (207) and an outer structure (209) having a frame (204) surrounding the inner structure (208). The inner structure (208) and the outer structure (209) are separate and can move relative to the chassis (202) and relative to one another. A suspension system (210) mounting the cab (203) to the chassis (202)) includes a first suspension subsystem (205a,b) connecting the outer structure (209) to the chassis (202) and a second suspension subsystem (206a,b) connecting the inner structure (208) to the chassis (202).

## Description

### FIELD

Embodiments of the present disclosure generally relate to a vehicle having a cab with a cab suspension system.

### BACKGROUND

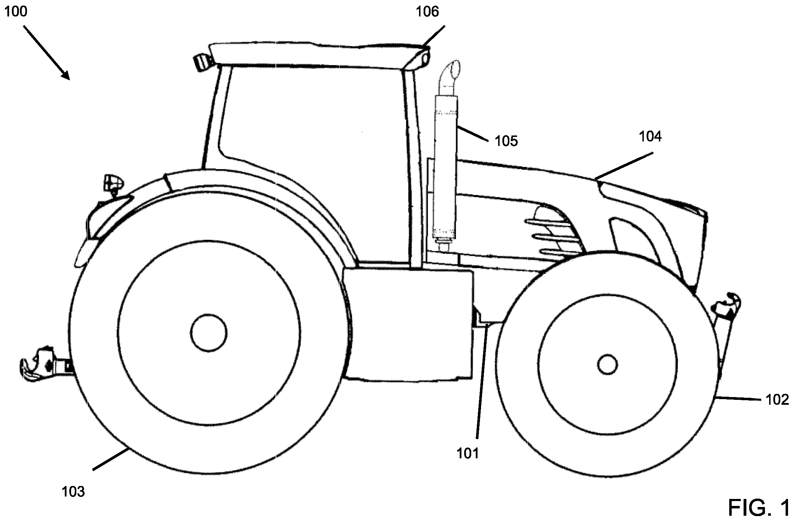

FIG. 1 illustrates an example vehicle in the form of tractor 100. The tractor comprises a chassis 101 on which front wheels 102 and rear wheels 103 are mounted. An engine enclosure 104 towards the front of the tractor 100 encloses an engine and associated components. The engine is connected to an exhaust stackpipe 105. A cab 106 is located towards a rear of the tractor 100 behind the engine enclosure 104. The cab 106 may typically be mounted to the chassis 101 via a cab suspension system.

The main requirement of a cab suspension system is to meet driver safety requirements. These requirements include reducing the vibration load experienced by a driver in the cab 106, i.e., to meet noise, vibration and harshness (NVH) requirements, while also minimising movement of the cab 106 relative to the chassis 101. A secondary requirement of a cab suspension system is to provide overall driver comfort. Optimising a cab suspension system for compliance with safety requirements generally comes at the expense of reduced driver comfort.

### BRIEF SUMMARY

According to the invention there is provided a vehicle comprising: a chassis; a cab for a driver of the vehicle, the cab comprising an inner structure having a floor and a seat mounted to the floor and an outer structure having a frame surrounding the inner structure; and a suspension system mounting the cab to the chassis characterised in that, the inner structure and the outer structure of the cab are capable of movement relative to the chassis and relative to one another, and wherein the suspension system comprises a first suspension subsystem connecting the outer structure to the chassis and a second suspension subsystem connecting the inner structure to the chassis.

Separation of the suspension system into first and second suspension subsystems for the outer and inner structures of the cab has the technical advantage of allowing independent tuning of the first and second subsystems according to the specific requirements of the outer and inner cab structures. Separation of the cab into an inner structure and an outer structure allows for improved modularity of the overall vehicle and improved vibration isolation of the floor of the cab from the chassis of the vehicle. The above-mentioned problem of compliance with safety requirements at the expense of reduced driver comfort can thereby be resolved.

In some examples, the first suspension subsystem comprises a first plurality of suspension mounts and the second suspension system comprises a second plurality of suspension mounts. The first and second pluralities may be the same or different.

In some examples, one or more of the second plurality of suspension mounts connect the inner structure to the outer structure. The inner structure would therefore be connected to the chassis by means of the suspension mounts and the first suspension system. In such examples, one or more of the second plurality of suspension mounts may be elevated relative to a remaining one or more of the second plurality of suspension mounts such that a roll axis of the cab relative to the chassis is partially above a floor level of the cab. A pitch axis of the cab may be above the floor level of the cab.

In some examples, the one or more of the second plurality of suspension mounts are located at a rear of the cab and the remaining one or more of the second plurality of suspension mounts are located at a front of the cab.

In some examples, the second plurality of suspension mounts comprise a first suspension mount located at a front of the cab and second and third suspension mounts located at a rear of the cab.

Some examples may further comprise a seat suspension mount connecting the seat to the floor of the cab.

In some examples, at least one of the first plurality of suspension mounts comprises an elastomeric bearing having a first mounting surface connected to the outer structure and a second mounting surface connected to the chassis.

In some examples, at least one of the second plurality of suspension mounts comprises an elastomeric bearing and a spring damper connected between the inner structure and the chassis. In some examples the elastomeric bearing is a spherical elastomeric bearing.

In some examples, at least one of the second plurality of suspension mounts comprises first and second elastomeric bearings connected on opposing ends of the spring damper.

In some examples, the spring damper comprises a coiled spring and/or a passive air spring.

In some examples, an axial spring constant of each of the first plurality of suspension mounts is greater than an axial spring constant of each of the second plurality of suspension mounts.

In some examples, at least one of the first suspension subsystem and the second suspension sub system comprises an active damping system. The active damping system may comprise at least one hydraulic or pneumatic actuator.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 is a sketch of an example tractor;
FIG. 2 is a schematic drawing of an example vehicle having a cab suspension system;
FIG. 3 is a cutaway schematic drawing of the cab suspension system of the vehicle of FIG. 2;
FIGs. 4 and 5 are schematic drawings of the example suspension mounts for the cab suspension system of FIG. 3;
FIG 6 is a schematic side view drawing of a vehicle with a conventional cab suspension system;
FIG. 7 is a schematic side view drawing of a vehicle with an example cab suspension system according to an embodiment;
FIG. 8 is a schematic side view drawing of a vehicle with an alternative example cab suspension system according to an embodiment;
FIG. 9 is a schematic rear view drawing of the vehicle of FIG. 6 with a conventional cab suspension system;
FIG. 10 is a schematic rear view drawing of the vehicle of FIG. 7 with an example cab suspension system according to an embodiment;
FIG. 11 is a schematic rear view drawing of the vehicle of FIG. 8 with an alternative example cab suspension system according to an embodiment;
FIG. 12 is a plot of load as a function of spring travel for a suspension mount for a conventional cab suspension system;
FIG. 13 is a plot of load as a function of spring travel for a suspension mount for a cab suspension system according to an embodiment; and
FIG. 14 is a schematic drawing illustrating a modular system for assembling a cab for a vehicle.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

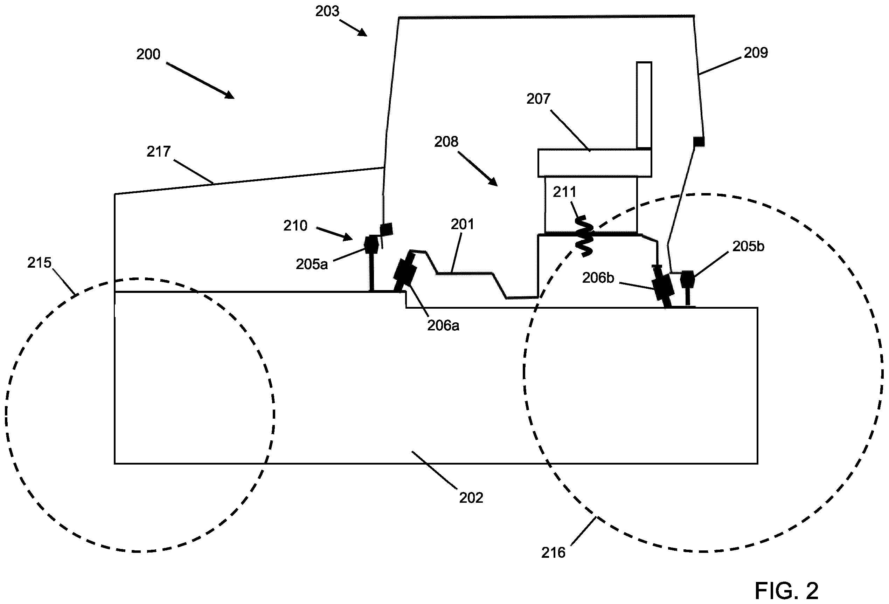

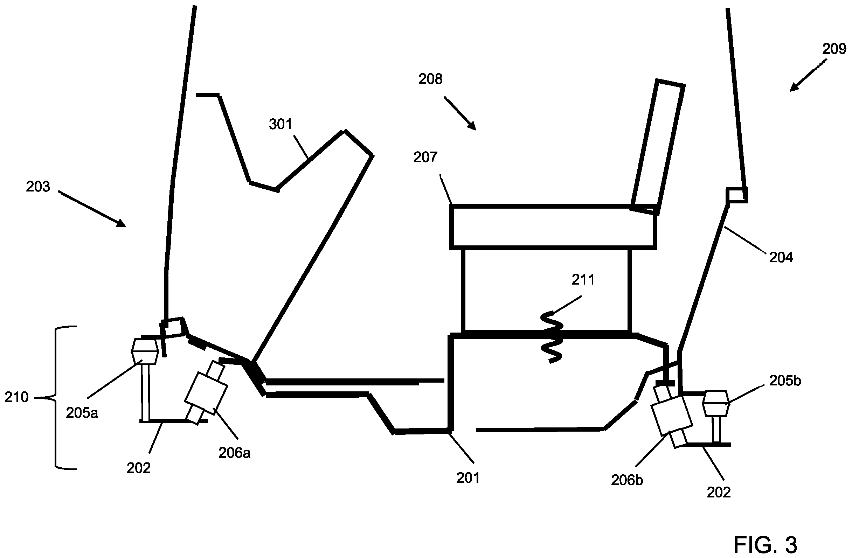

FIG. 2 illustrates an example vehicle 200 according to an embodiment. Similar to the vehicle 100 of Figure 1, the vehicle 200 comprises a chassis 202 on which front wheels 215 and rear wheels 216 are mounted. In alternative embodiments, the front and/or rear wheels 215, 216 may be replaced by tracks. An engine enclosure 217 towards the front of the tractor 200 encloses an engine (not shown). The vehicle 200 further comprises a cab 203 for a driver of the vehicle, which is shown in more detail in FIG. 3. The cab 203 comprises an inner structure 208 having a floor 201 and a seat 207 mounted to the floor 201. The cab 203 further comprises an outer structure 209 having a frame 204 surrounding the inner structure 208, which is shown further in FIG. 3.

A suspension system 210 mounts the cab 203 to the chassis 202. The suspension system comprises first and second suspension subsystems 205, 206. The first suspension subsystem 205 connects the outer structure 209 to the chassis 202 and the second suspension subsystem 206 connects the inner structure to the chassis 202. As illustrated in FIG. 2, the first suspension subsystem 205 comprises a first plurality of suspension mounts 205a, 205b connecting the outer structure 209 to the chassis 202 and the second suspension subsystem 205 comprises a second plurality of suspension mounts 206a, 206b connecting the inner structure 208 to the chassis 202. The inner structure 208 may further comprise a seat suspension mount 211 connecting the seat 207 to the floor 201. The number and location of the suspension mounts forming the first and second suspension subsystems 205, 206 can be varied from those described above.

The sectional cutaway view shown in FIG. 3 illustrates two of the plurality of first suspension mounts 205a, 205b located at the front and rear of the cab 203. The first suspension mounts 205a may be located at four corners of the cab 203, i.e. a front pair located at the left and right of front of the cab 203 and a rear pair located at the left and right of the rear of the cab 203. Similarly, the second plurality of suspension mounts 206a, 206b may be located at the front and rear of the floor 201, with a first pair located at the left and right of the front of the floor 201 and a rear pair located at the left and right of the rear of the floor 201. Further suspension mounts may also be provided. In one example, the second plurality of suspension mounts 206a,b may comprise three suspension mounts, one mounted at the front of the cab 203 and two mounted at the rear of the cab 203.

The interior of the cab 203 further comprises interior panelling 301, which contains various components such as steering, a display and other controls for the vehicle.

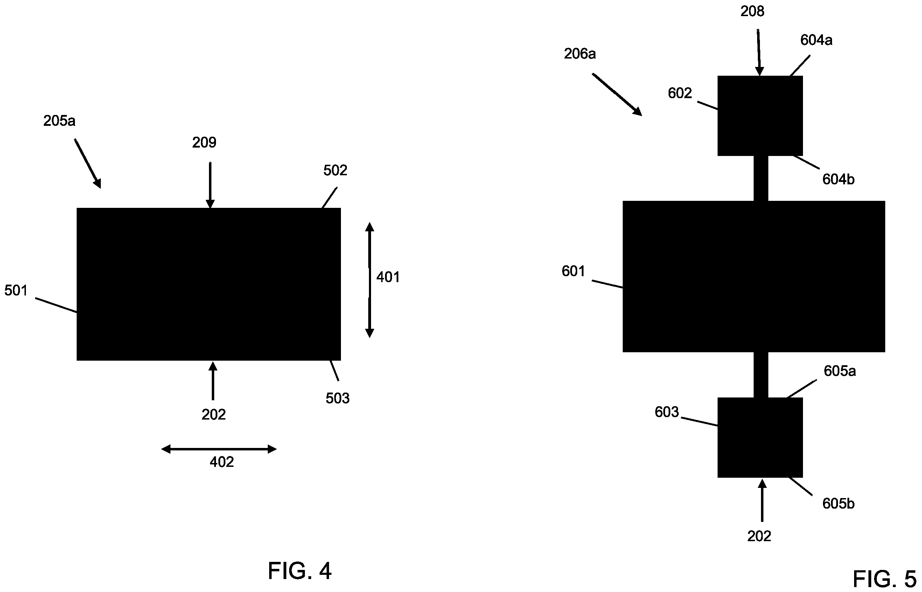

Separating the cab suspension system 210 into first and second suspension subsystems 205, 206 allows each subsystem to be optimised to meet the specific suspension requirements of the outer and inner structures of the cab. This is in contrast to a conventional cab suspension system, where a compromise is generally made when tuning the suspension system between driver safety and driver comfort. For example, the first suspension sub system 205 may be optimised to minimise movement of the outer structure 209 of the cab 203 relative to the chassis 202, while meeting noise, vibration and harshness (NVH) requirements. This may be achieved through the use of elastomeric bearings, which are effective in restricting transmission of vibrations while minimising relative movement of outer structure 209 of the cab 203 and the chassis 202. The second suspension subsystem 206 may be independently optimised for driver comfort and may allow greater relative movement between the floor 201 and the chassis 202. The second suspension subsystem 206 may need to do less work in damping vibrations due to the reduced weight of the inner structure relative to the outer structure, allowing for increased driver comfort. The suspension mounts 205a, 205b of the first suspension subsystem 205 may therefore be configured to have a higher stiffness than the suspension mounts 206a-206b of the second suspension subsystem 206. This is described in more detail in relation to FIGs. 4 and 5.

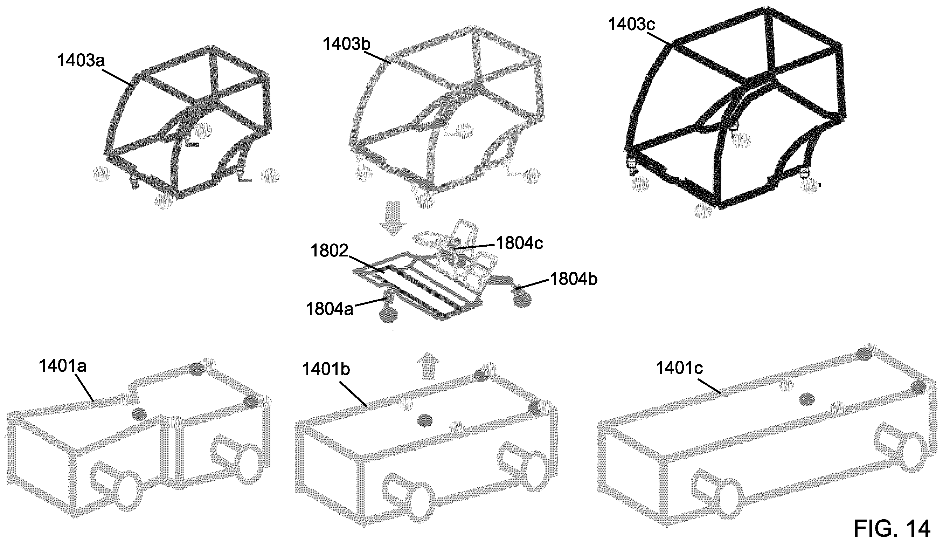

A further advantage of separating the cab 203 into separately mountable inner and outer structures 208, 209 with separate suspension subsystems is in improved modularity. In conventional arrangements, the cab is generally only compatible with a single type of vehicle and to a limited range of vehicles of any given type. Separating the cab 203 into inner and outer structures allows for standardisation across a wider variety of types of vehicle and across a broader range of vehicles in a given type. This not only aids with retrofitting the cab 203 to the chassis of existing vehicles, but also allows for the use of interchangeable outer structures with the same inner structure or vice versa. This may be particularly useful in the field of agricultural vehicles, where the same inner structure could be used in a harvester as in a sprayer or a tractor but with different outer structures according to the function of the agricultural vehicle. Similar advantages relating to modularity may be realised in the field of construction vehicles. The general principle of modular interchangeable structures for different types or ranges of vehicle is described below with reference to FIG. 14.

FIGs. 4 and 5 illustrate example first and second suspension mounts 205a, 206a of the first and second suspension subsystems 205, 206.

FIG. 4 illustrates an example of a first suspension mount 205a for use as part of the first suspension subsystem 205. This first suspension may comprise an elastomeric bearing 501. The elastomeric bearing 501 may be a spherical elastomeric bearing, which allows for a limited amount of rotation about a central point in two orthogonal directions, usually within a specified angular limit, along with transmission of normal and horizontal forces via elastic deformation. The elastomeric bearing 501 may for example be of a conical mount type such as the Fendt H218PB1035070 conical bearing. The elastomeric bearing 501 may for example be a hydraulic conical mount which comprises a spring component and a hydraulic shock absorber.

The first elastomeric bearing 501 comprises a first, or upper, mounting surface 502 connected to the outer structure 209, i.e. to the frame 204 of the cab 203 and a second, or lower, mounting surface 503 connected to the chassis 202.

FIG. 5 illustrates an example of a second suspension mount 206a for use as part of the second suspension subsystem 206. The second suspension mount 206a comprises first and second elastomeric bearings 602, 603 connected to opposing ends of a spring damper 601. A first, or upper, surface 604a of the first elastomeric bearing 602 is mounted to the inner structure 208, i.e. the floor 201, and a second, or lower, surface 605b of the second elastomeric bearing 603 is mounted to the chassis 202. The spring damper 601 is mounted between a second, or lower, mounting surface 604b of the first elastomeric bearing 602 and a first, or upper, surface 605a of the second elastomeric bearing 603. The spring damper 601 may comprise a damped coil spring or a passive air spring. The first and second elastomeric bearings 602, 603 may be spherical or conical elastomeric bearings.

Each of the first and second suspension mounts 205a, 206a have an axial stiffness and a lateral stiffness. The axial stiffness may be defined by resistance to movement in a first direction 401 between mounting points of the cab and the chassis. The lateral stiffness may be defined by resistance to movement in a direction 402 lateral, e.g. orthogonal, to the direction between the mounting points of the cab and chassis. For the second suspension mounts 206a, the axial stiffness is made up of the axial stiffnesses of the elastomeric bearings 602, 603 and the spring damper 601. The axial stiffness, and optionally also the lateral stiffness, of the first suspension mounts 205a,b may be generally greater than that of the second suspension mounts 206a,b. The increased stiffness of the first suspension mounts 205a,b in the first suspension subsystem 205 reduces relative movement of the outer structure 209 of the cab and the chassis 202. In general, the stiffness in the axial direction of the elastomeric bearing 501 is higher than, for example, the spring damper 601, while the stiffness of the elastomer mounts 602, 603 are generally higher than that of the elastomeric bearing 501 and higher than that of the spring damper 601.The outer structure 209 typically comprises the majority of the total mass of the cab 203, resulting in the suspension mounts 205a-b of the first suspension subsystem 205 bearing a higher load than the suspension mounts 206a-b of the second suspension subsystem. An increased axial, and also optionally lateral, stiffness of the suspension mounts 205a-b of the first suspension subsystem may better enable compliance with NVH requirements by limiting the transfer of vibrations, for example from the engine and transmission, through to the interior of the cab 203.

The suspension mounts 206a,b of the second suspension subsystem 206 can be independently optimised for driver comfort, in part by having a reduced stiffness compared to the suspension mounts 205a-b of the first suspension subsystem. The decreased stiffness of the suspension mounts 206a-b of the second suspension subsystem increases spring deflection for a given amount of force, increasing relative movement of the inner structure 208 to the chassis 202. This can improve driver comfort when, for example, moving over rough terrain. To avoid this larger relative movement resulting in oscillations, a spring or other damper 601 can be used to damp large amplitude oscillations, while the elastomeric bearings 602, 603 reduce transmission of higher frequency vibrations.

A driver in the cab 203 may also be subject to noise carried by and transmitter through the frame 204 of the cab 203. Separating the cab 203 into separately mounted inner and outer structures 208, 209 allows this structure-borne noise to be decoupled, limiting the transfer of structure-borne noise to the driver.

The floor 201 may be composed of a polymer to further limit transfer of structure borne noise through to the seat 207. Additionally, transmission of pressure pulses, which are caused by the structure-borne noise on the surface, can be reduced by using a polymer floor 201, so that airborne noise can be reduced further.

Reinforcing members may be attached to the frame 204 to increase its stiffness, further reducing the transmission of structure-borne noise to the inner structure 208.

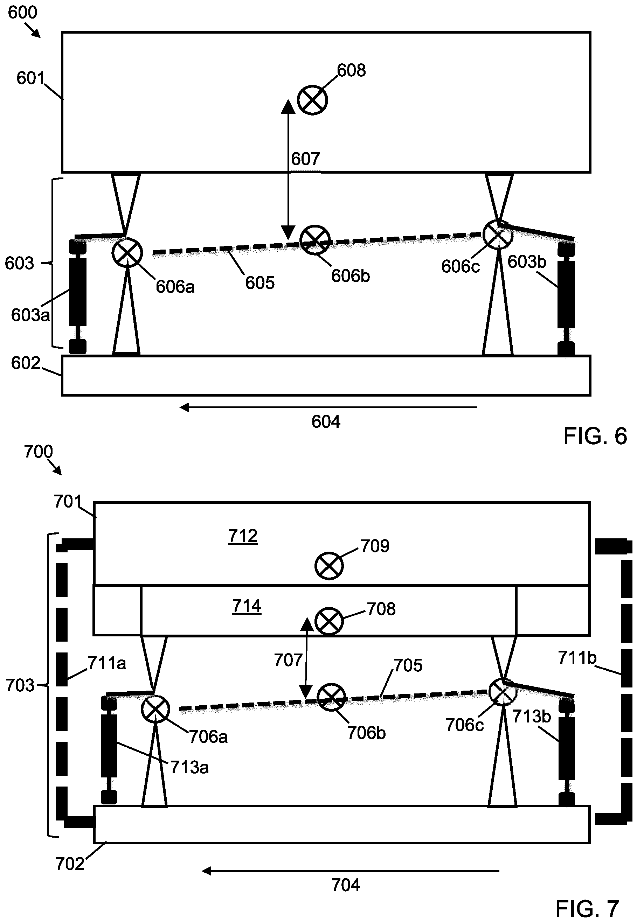

FIG. 6 is a schematic diagram illustrating a side view of a conventional vehicle 600 with a cab 601 mounted to a chassis 602 via a cab suspension system 603, with the travel direction 604 of the vehicle 600 indicated. The suspension system 603 comprises a plurality of suspension mounts 603a,b, which are typically mounted at each corner of the cab 601. A roll axis 605 of the cab 601 is indicated, which extends between front and rear bearing points 606a, 606c. The roll axis 605 is underneath the floor of the cab 601 and the distance 607 between a centre of gravity 608 of the cab 601 and the middle momentary pole 606b is high. This results in a high roll-moment when the cab 601 rolls relative to the chassis 602 during travel.

FIG. 7 is a schematic diagram illustrating a side view of a vehicle 700 according to an embodiment, in which a cab 701 is mounted to a chassis 702 via a cab suspension system 703, again with the travel direction 704 indicated. The suspension system 703 comprises a first plurality of suspension mounts 711a,b (forming part of a first suspension subsystem) connecting the outer structure 712 of the cab 701 to the chassis 702 and a second plurality of suspension mounts 713a,b (forming part of a second suspension subsystem) connecting the inner structure 714 of the cab 701 to the chassis 702. The inner structure 714 has a centre of gravity 708 that is below the centre of gravity 709 of the outer structure 712. Each of the first plurality of suspension mounts 711a,b may for example comprise an elastomeric bearing, for example a conical or spherical elastomeric bearing. Each of the second plurality of suspension mounts 731a,b may for example comprise an elastomeric bearing and a spring damper as described above. A roll axis 705 of the cab 701 is indicated, which extends between front and rear bearing points 706a, 706c. The use of a second suspension subsystem for the inner structure 714 of the cab 701, which comprises the cab floor, reduces the distance 707 between the centre of gravity 708 of the inner structure 714 and the middle momentary pole 706b of the roll axis 705. The roll axis 705 is still below the floor of the cab 701 but the roll-moment of the inner structure 208 when the cab 701 rolls relative to the chassis 702 during travel is reduced. Due to the reduced rolling moment, there are lower bearing reaction forces at bearing points 706a, 706c, which are exclusively responsible for guiding the cabin. As the bearing reaction forces are lower, then the bearings 706a and 706c can be designed to be softer, since they generally do less damping work. Accordingly, the suspension components can also be made smaller and cheaper. In addition, the stiffness and weight of the structural components can be reduced.

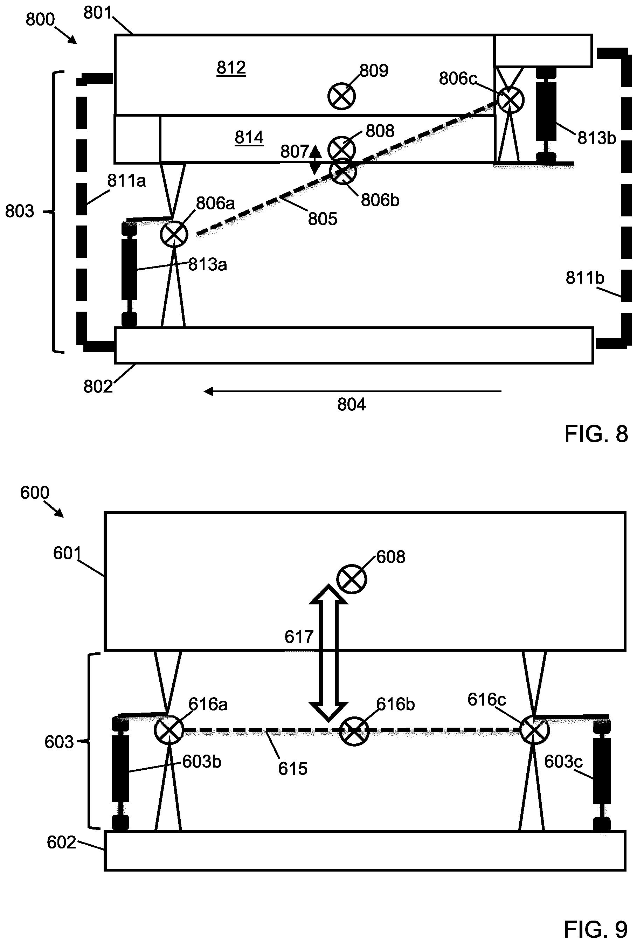

FIG. 8 is a schematic diagram illustrating a side view of a vehicle 800 according to an alternative embodiment, in which a cab 801 is mounted to a chassis 802 via a cab suspension system 803, again with the travel direction 804 indicated. The suspension system 803 comprises a first plurality of suspension mounts 811a,b (forming part of a first suspension subsystem) connecting the outer structure 812 of the cab 801 to the chassis 802 and a second plurality of suspension mounts 813a,b (forming part of a second suspension subsystem) connecting the inner structure 814 of the cab 801 to the chassis 802. The inner structure 814 has a centre of gravity 808 that is below the centre of gravity 809 of the outer structure 812. As with the vehicle 700 of FIG. 7, each of the first plurality of suspension mounts 811a,b may for example comprise an elastomeric bearing, for example a conical or spherical elastomeric bearing. Each of the second plurality of suspension mounts 813a,b may for example comprise an elastomeric bearing and a spring damper as described above. In this example, a rear one (or more) 813b of the second plurality of suspension mounts connects the inner structure 814 to the outer structure 812 of the cab 801 and is elevated relative to a front one (or more) 813a of the second plurality of suspension mounts, which connects the inner structure 814 directly to the chassis 802. A roll axis 805 of the cab 801 is indicated, which extends between front and rear bearing mounts 806a, 806c. In this case, because the rear second suspension mount(s) 813b is/are elevated relative to the front suspension mount(s) 813a, the roll axis 805 is raised to be at least partly above the floor level of the cab 801, reducing the roll-moment of the inner structure 208 further by reducing the distance 807 between the centre of gravity 808 of the inner structure 814 and the middle momentary pole 806b. This provides improved ride comfort for the driver whose seat is support on the inner structure 208.

FIG. 9 is a schematic diagram illustrating a rear view of the conventional vehicle 600 of FIG. 6, illustrating the cab 601 mounted to the chassis 602 via the cab suspension system 603, with a rear two 603b,c of the suspension mounts illustrated. A pitch axis 615 of the cab 601 is indicated, which extends between left and right bearing mounts 616a, 616c. The pitch axis 615 is underneath the floor of the cab 601 and the distance 617 between a centre of gravity 608 of the cab 601 and the middle momentary pole 616b is high. This results in a high pitch-moment when the cab 601 pitches relative to the chassis 602 during travel, for example when braking.

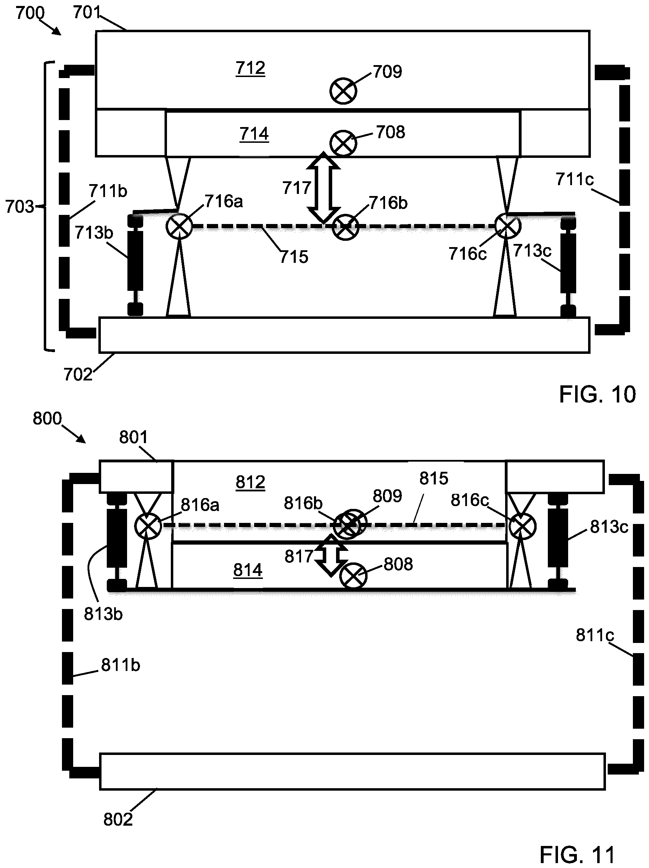

FIG. 10 is a schematic diagram illustrating a rear view of the vehicle 700 of Fig. 7, illustrating the cab 701 mounted to the chassis 702 via the cab suspension system 703. A rear two 711b, 711c of the first plurality of suspension mounts are shown connecting the outer structure 712 of the cab 701 to the chassis 702 and a rear two 713b, 713c of the second plurality of suspension mounts are shown connecting the inner structure 714 of the cab 701 to the chassis 702. The inner structure 714 has a centre of gravity 708 that is below the centre of gravity 709 of the outer structure 712. A pitch axis 715 of the cab 701 is indicated, which extends between left and right bearing mounts 716a, 716c. The use of a second suspension subsystem for the inner structure 714 of the cab 701, which comprises the cab floor, reduces the distance 717 between the centre of gravity 708 of the inner structure 714 and the middle momentary pole 716b of the pitch axis 705, thereby reducing the pitch moment of the inner structure. This provides for improved ride comfort for the driver.

FIG. 11 is a schematic diagram illustrating a rear view of the vehicle 800 of FIG. 8, showing the cab 801 mounted to the chassis 802 via the cab suspension system 803. A rear two 811b, 811c of the first plurality of suspension mounts are shown connecting the outer structure 812 of the cab 801 to the chassis 802 and a rear two 813b, 813c of the second plurality of suspension mounts are shown connecting the inner structure 814 of the cab 801 to the chassis 802 via the outer structure 812. The inner structure 814 has a centre of gravity 808 that is below the centre of gravity 809 of the outer structure 812. Because the rear ones 813b, 813c of the second plurality of suspension mounts of the second suspension subsystem connecting the inner structure 814 to chassis 802 via the outer structure 812 of the cab 801 are elevated relative to a front one (or more) 813a of the second plurality of suspension mounts, a pitch axis 815 of the cab 801, which extends between left and right bearing mounts 816a,b is raised to be above the floor level of the cab 801, reducing the pitch-moment of the inner structure 814 further by reducing the distance 817 between the centre of gravity 808 of the inner structure 814 and the middle momentary pole 816b.

The suspension mounts described herein may comprise passive damping systems or alternatively may comprise an active damping system in which the damping can be adjusted depending on loads and displacements experienced by the vehicle. A ride height of the vehicle or a roll of the vehicle may for example be sensed and used to adjust a damping property of the suspension system using an actuator such as a hydraulic or pneumatic actuator.

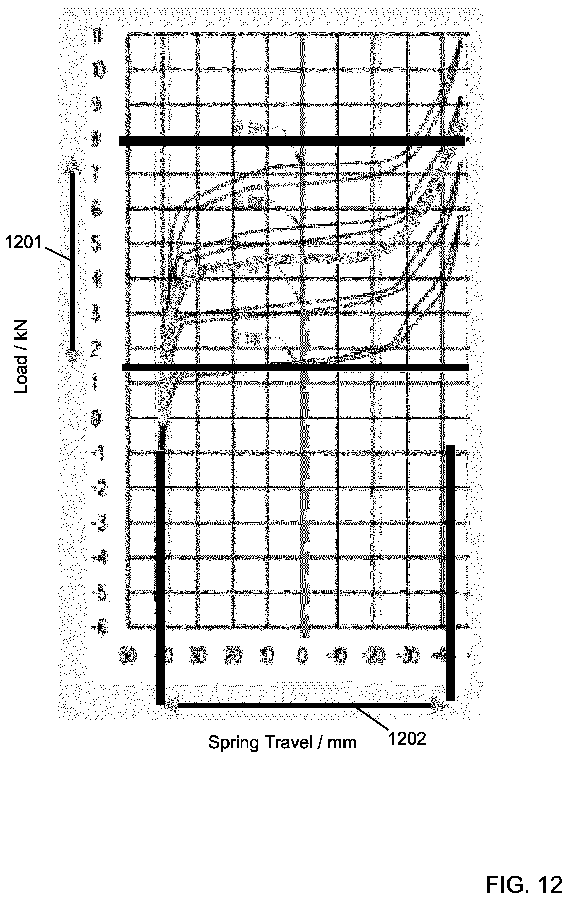

FIG. 12 is a plot of load as a function of spring travel for a suspension mount of an example conventional cab suspension system, in which an air spring is designed for pressures of between 2 and 8 bar, resulting in an operating range, or load spectrum 1201, of between around 1.5 and 7.5 kN with a maximum spring travel path 1202 of around 80 mm.

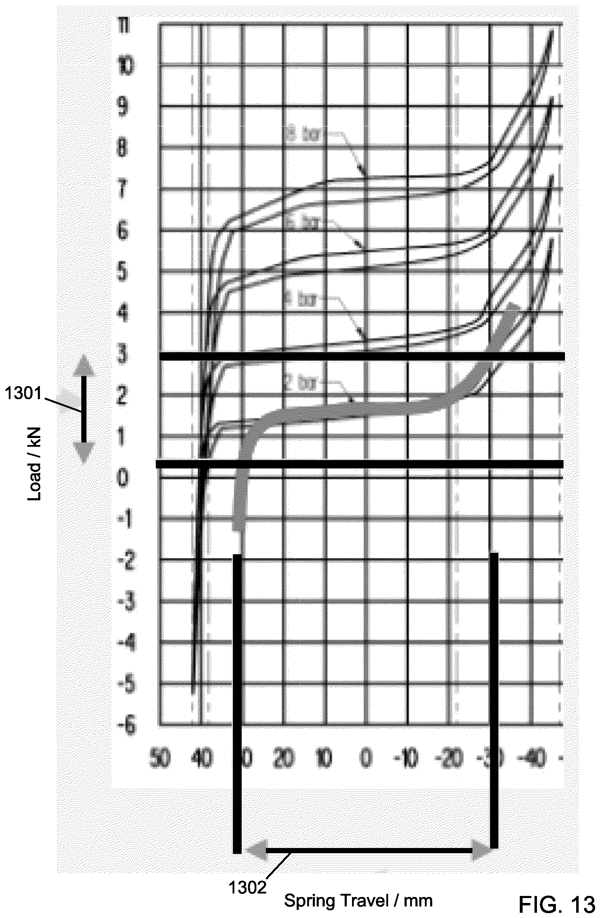

FIG. 13 is a plot of load as a function of spring travel for a suspension mount of an example cab suspension system according to an embodiment, in which the suspension mounts are optimised for comfort for the operator, which results in a reduced load spectrum 1301 of between around 0.5 and 3 kN and with a smaller spring travel path 1302 of around 60 mm due to the smaller inertia and therefore reduced roll and pitch moments. This can result in a more compact spring element design for the inner structure suspension mounts.

FIG. 14 illustrates schematically how providing the inner and outer structures of the cab can allow for a modular approach to construction for different types of vehicle chassis. Different vehicles may have different requirements and applications, requiring different chassis 1401a-c and corresponding different cab structures 1403a-c. A common inner structure 1402 with suspension mounts 1404a-c can be used for all three different vehicle types, while a different outer structure 1403a-c particular to each vehicle chassis 1401a-c can be used in combination with the common inner structure 1402. FIG. 14 also illustrates a typical arrangement of mounting points for the first and second suspension mounts, in which four suspension mounts are located at each corner of the outer structure 1403a-c, two at the front and two at the rear, while three suspension mounts 1404a-c are provided to connect the inner structure to the chassis, with one suspension mount 1404a located at the front and two 1404b,c at the rear.

All references cited herein are incorporated herein in their entireties. If there is a conflict between definitions here and in an incorporated reference, the definition herein shall control.

## Claims

1. A vehicle (200) comprising:
a chassis (202);
a cab (203) for a driver of the vehicle, the cab (203) comprising an inner structure (208) having a floor (201) and a seat (207) mounted to the floor (201) and an outer structure (209) having a frame (204) surrounding the inner structure (208); and
a suspension system (210) mounting the cab (203) to the chassis (202);
**characterised in that** the inner structure (208) and the outer structure (209) of the cab (203) are capable of movement relative to the chassis (203) and relative to one another, and wherein the suspension system (210) comprises a first suspension subsystem (205a,b) connecting the outer structure (209) to the chassis (202) and a second suspension subsystem (206a,b) connecting the inner structure (208) to the chassis (202).

2. The vehicle (200) of claim 1, wherein the first suspension subsystem comprises a first plurality of suspension mounts (205a,b) and the second suspension system comprises a second plurality of suspension mounts (206a,b).

3. The vehicle (800) of claim 2, wherein one or more of the second plurality of suspension mounts (813a-c) connects the inner structure (814) to the outer structure (812).

4. The vehicle (800) of claim 2 or claim 3, wherein the one or more of the second plurality of suspension mounts (813a-c) are elevated relative to a remaining one or more of the second plurality of suspension mounts (813a-c) such that a roll axis (805) of the cab (801) relative to the chassis (802) is partially above a floor level of the cab (801).

5. The vehicle (800) of claim 4, wherein a pitch axis (815) of the cab (801) is above the floor level of the cab (801).

6. The vehicle (800) of claim 4, wherein the one or more of the second plurality of suspension mounts (813a-c) are located at a rear of the cab (801) and the remaining one or more of the second plurality of suspension mounts (813a-c) are located at a front of the cab (801).

7. The vehicle (200, 800) of any one of claims 2 to 6, wherein the second plurality of suspension mounts (813a-c) comprise a first suspension mount (813a) located at a front of the cab (801) and second and third suspension mounts (813b,c) located at a rear of the cab (801).

8. The vehicle (200, 800) of any one of claims 2 to 7, wherein the first plurality of suspension mounts (811a-c) comprise first and second suspension mounts (813a) located at a front of the cab (801) and third and fourth suspension mounts (813b,c) located at a rear of the cab (801).

9. The vehicle (200) of any one of claims 2 to 8, wherein at least one of the first plurality of suspension mounts (205a,b) comprises an elastomeric bearing (501) having a first mounting surface (502) connected to the outer structure (209) and a second mounting surface (503) connected to the chassis (202).

10. The vehicle (200) of any one of claims 2 to 9, wherein at least one of the second plurality of suspension mounts(206a,b) comprises an elastomeric bearing (602, 603) and a spring damper (601) connected between the inner structure (208) and the chassis (202).

11. The vehicle (200) of claim 10, wherein the elastomeric bearing (602, 603) is a spherical elastomeric bearing.

12. The vehicle of claim 10 or claim 11, wherein at least one of the second plurality of suspension mounts (206a,b) comprises first and second elastomeric bearings (602, 603) connected on opposing ends of the spring damper (601).

13. The vehicle of any one of claims 10 to 12, wherein the spring damper (601) comprises a coiled spring and/or a passive air spring.

14. The vehicle (200) of any one of claims 2 to 13, wherein an axial spring constant of each of the first plurality of suspension mounts (205a,b) is greater than an axial spring constant of each of the second plurality of suspension mounts (206a,b).

15. The vehicle (200) of any one of claims 2 to 14, wherein at least one of the first suspension subsystem (205) and the second suspension subsystem (206) comprises an active damping system.

16. The vehicle (200) of claim 15, wherein the active damping system comprises a hydraulic or pneumatic actuator.

17. The vehicle (200) of any preceding claim, further comprising a seat suspension mount (211) connecting the seat (207) to the floor (201) of the cab (203).
